# EUROPÄISCHE PATENTSCHRIFT

(11) **EP 3 800 015 B1**
(45) Veröffentlichungstag und Bekanntmachung des Hinweises auf die Patenterteilung: **01.01.2025**
(21) Anmeldenummer: 20195208.2
(22) Anmeldetag: 09.09.2020
(51) Int. Cl.: B25J 15/02, B25J 19/00

(54) **ROBOTER ZUM GREIFEN UND/ODER HALTEN VON GEGENSTÄNDEN**
ROBOT FOR GRIPPING AND / OR HOLDING OBJECTS
ROBOTS DE PRÉHENSION ET/OU DE RETENUE D'OBJETS

(30) Priorität: 01.10.2019 EP 19200679
(43) Veröffentlichungstag der Anmeldung: 07.04.2021
(73) Patentinhaber: SMW-AUTOBLOK Spannsysteme GmbH, 88074 Meckenbeuren (DE)
(72) Erfinder: Maurer, Eckhard, 88094 Oberteuringen (DE)
(74) Vertreter: Christ, Niko

(56) Entgegenhaltungen:
- EP-A1- 0 201 685
- EP-B1- 0 201 685
- WO-A1-2018/056452
- JP-A- H0 825 105
- JP-A- H05 293 788
- US-A- 4 830 569
- US-A- 5 624 364
- US-A1- 2002 057 164
- US-A1- 2011 256 995
- US-A1- 2018 267 168

## Beschreibung

Die Erfindung bezieht sich auf einen Roboter zum Greifen und/oder Halten von Gegenständen nach dem Oberbegriff des Patentanspruches 1.

Ein solcher Roboter ist bereits aus der US 4,830,569 A vorbekannt. Hinsichtlich des weiteren Standes der Technik ist auf die JP H08 25105 A, die WO 2018/056452 A1, die EP 0 201 685 B1, die US 2002/0057164 A1, die US 2011/0256995 A1, die JP H05 293788 A, die US 5,624,364 A und die US 2018/0267168 A1 hinzuweisen.

Solche Robotersysteme werden zur Unterstützung von manuellen Arbeiten seit Jahrzehnten, beispielsweise in der Fertigungsindustrie, eingesetzt. Die Roboter transportieren oder halten schwere Gegenstände im Raum, sodass diese frei zugänglich sind, um maschinell oder manuell bearbeitet werden können.

Die Roboter bestehen aus mehreren gelenkig miteinander verbundenen Roboterarmen. Die Gelenke zwischen den Roboterarmen können dabei als Kardangelenke, als Drehgelenke in Form von Scharnieren oder Kugelkopfgelenken ausgestaltet sein. Demnach ist das freie Ende des Roboterarms in mehreren rotatorischen und/oder translatorischen Freiheitsgraden beweglich.

Die für die Bewegung der einzelnen Roboterarme erforderlichen Antriebssysteme bestehen oftmals aus einem Elektromotor, der jeweils an einer Stromquelle anzuschließen ist, um die erforderliche Energie bzw. elektrische Spannung zu erhalten, wodurch die Drehbewegungen der einzelnen Roboterarme erfolgen.

Zur Aufnahme der Gegenstände weist das freie Ende des Roboterarms eine Greif- und/oder Haltevorrichtung auf, in der ein weiterer Elektromotor eingebaut ist. Durch diesen Elektromotor soll nämlich mindestens ein Druckstück beweglich bzw. angetrieben sein. Das jeweils angetriebene Druckstück kann demnach in Richtung der Längsachse oder senkrecht zu der Greif- und/oder Haltevorrichtung verfahren werden und wirkt mit mindestens einem weiteren Druckstück zusammen, das entweder ortsfest an der Greif- und/oder Haltevorrichtung angebracht ist oder das ebenso mit dem Elektromotor trieblich gekoppelt ist und folglich die beiden Druckstücke aufeinander zu bzw. voneinander wegbewegt werden können. Zwischen den jeweiligen Druckstücken ist der eingespannte Gegenstand angeordnet, sodass dieser von der von dem Elektromotor aufgewandten Zustellkraft zwischen den Druckstücken gehalten ist.

Die Greif- und/oder Haltevorrichtung ist dabei um ihre eigene Längsachse rotierbar an dem endseitigen Roboterarm abgestützt, sodass diese entgegen oder im Uhrzeigersinn gedreht werden kann, um beispielsweise die freie Zugänglichkeit des eingespannten Gegenstandes zu verbessern.

Als nachteilig hat sich herausgestellt, dass die Rotationsmöglichkeit der Greif- und/oder Haltevorrichtung eingeschränkt ist, denn durch die für die elektrische Energieversorgung des Elektromotors erforderlichen Leitungen begrenzen diese die Verdrehmöglichkeiten. Wenn nämlich ein Rotationswinkel von 360° erreicht ist, dann verdrehen sich die elektrischen Leitungen ineinander, unabhängig davon, ob diese im Inneren oder auf der Außenseite zwischen dem Roboterarm und der angeschlossenen Greif- und/oder Haltevorrichtung verlegt sind.

Folglich können bislang bekannte Roboter ausschließlich eine maximale Rotation von 360° ausführen. Sobald der maximale Rotationswinkel erreicht ist, ist es zwingend erforderlich, die Greif- und/oder Haltevorrichtung zurückzustellen. Folglich können die bekannten Roboter eine begrenzte Rotation von +/- 360° bezogen auf ihre Längsachse durchführen.

Selbst wenn der Rotationswinkel der Greif- und/oder Haltevorrichtung durch Anschläge oder dergleichen begrenzt ist, unterliegen die elektrischen Leitungen einem erheblichen Verschleiß, denn durch die permanente Rotation der Greif- und/oder Haltevorrichtung wirken auf die elektrischen Leitungen Schwerkräfte, durch die die Leitungen nach einer bestimmten Betriebsdauer kaputt sind und daher ausgewechselt werden müssen.

Beispielsweise ist aus der US 4,830,569 A eine berührungslose kapazitive Energieübertragung für einen Roboterarm bekannt geworden.

Die kapazitive Energie-Übertragung ist nachteiliger Weise nicht geeignet, da üblicherweise der Elektromotor für den Betrieb der Greif- und Halteeinrichtung an der freien Stirnseite des Roboterarmes einen enormen Energiebedarf benötigt und folglich die erforderliche Energie durch die Kapazität nicht in ausreichender Größenordnung zur Verfügung gestellt werden kann.

Die kapazitive Energieübertragung ist in ihrem Leistungsvermögen nämlich erheblich eingeschränkt, so dass diese zur Bewegung von mehreren Bauelementen, nämlich Greiffingern oder Rotationen des Greifarmes, nicht ausreichend elektrische Energie liefert.

Darüber hinaus weisen kapazitive Energieübertragungseinrichtung den Nachteil auf, dass die elektrischen Leiter in einem äußerst gering bemessenen Abstand zueinander zu positionieren sind. Die Leistungs- oder Übertragungsrate für eine kapazitive Energieübertragungseinrichtung zwischen der primärseitigen Quelle und sekundärseitigen Senke bzw. Last verdoppelt sich mit jeder Halbierung des Abstandes zwischen diesen beiden Seiten und umgekehrt. Technisch sinnvoll nutzbare Kapazitäten für eine Energieübertragung im Bereich einiger Watt liegen im zweistelligen Picofarad. Dies bedeutet jedoch, dass beispielsweise handtellergroße Flächen als Sender und Empfänger der kapazitive Energieübertragungseinrichtung erforderlich sind, da Abstände, die größer als 1 mm sein sollen, mit einer geringen Übertragungsrate funktionieren. Gerade bei Robotern ist jedoch ein Abstand zwischen dem Koppler und dem Flansch wesentlich größer zu bemessenen, um vor allem die Rotation des Roboterarmes zu gewährleisten.

Zudem benötigen die großflächig bauenden Sender und Empfänger der kapazitiven Energieübertragungseinrichtung einen erheblichen Platz, denn durch die Größe der Sender und Empfänger ist auch die Leistungsrate der kapazitive Energieübertragungseinrichtung abhängig.

Es ist daher Aufgabe der Erfindung, einen Roboter der eingangs genannten Gattung derart weiterzubilden, dass die an dem freien Ende des Roboterarms angeordnete Greif- und/oder Haltevorrichtung im Raum frei beweglich ist, dass also die Rotation um die eigene Längsachse beliebig oft und schnell ausgeführt werden kann, ohne dass die für die Bewegungen des Roboters notwendigen mechanischen Bauteile eingeschränkt sind.

Diese Aufgabe ist erfindungsgemäß durch die Merkmale des kennzeichnenden Teils von Patentanspruch 1 gelöst:
Weitere vorteilhafte Weiterbildungen der Erfindung ergeben sich aus den Unteransprüchen.

Dadurch, dass zwischen einer freien Stirnseite des endseitigen Roboterarms und der Greif- und/oder Haltevorrichtung eine Schnittstelle vorgesehen ist, die von einem drehfest an dem Roboterarm befestigten Koppler und von einem an diesen angepassten Flansch überbrückt ist, der drehfest mit der Greif- und/oder Haltevorrichtung und der Antriebswelle verbunden ist, dass in dem Koppler eine erste induktiv betriebene Sende-Empfangseinrichtung vorgesehen ist, die über eine dem Roboterarm zugebrachte elektrische Leitung mit einer Stromquelle verbunden ist, dass in dem Flansch eine zweite induktiv betriebene Sende-Empfangseinrichtung vorgesehen ist, die mit dem Elektromotor in der Greif- und/oder Haltevorrichtung über elektrische Leitungen verbunden ist, dass zwischen dem Koppler und dem Flansch ein Luftspalt als Bestandteil der Schnittstelle vorhanden ist, ist eine freie Rotation der Greif- und/oder Haltevorrichtung im Raum gewährleistet, da die Energieversorgung des in der Greif- und/oder Haltevorrichtung vorhandenen Elektromotors über die beiden induktiv betriebenen Sende-Empfangseinrichtungen erfolgt. Die Energieversorgung des Elektromotors über die beiden induktiven Sende-Empfangseinrichtungen ermöglicht eine freie und schnelle Rotation der Greif- und/oder Haltevorrichtung mit beliebigen Rotationswinkeln. Ein Verschleiß von elektrischen Kabeln, die die Energieversorgung bei herkömmlichen Robotern übernehmen, entfällt vollständig.

Zudem übertragen die beiden Sende-Empfangseinrichtungen elektrische Signale, durch die die Bewegungen der Druckstücke einstellbar und permanent überwacht sind, wenn in jeder der Sende-Empfangseinrichtungen mindestens ein Modulator und ein Demodulator vorgesehen sind, durch die wechselweise elektrische Energie und/oder elektrische Signale zwischen den beiden Sende-Empfangseinrichtungen übertragen sind.

Vorteilhafter Weise bestehen die Sende- und Empfangseinrichtungen aus jeweils mindestens einem Paar von Modulatoren und Demomodulatoren, durch die die induktive Übertragung von Signalen oder elektrischer Energie unabhängig voneinander ausgeführt werden können. Entweder übertragen nämlich die Paare von Modulatoren und Demodulatoren die Signale oder die elektrische Energie. Dabei können die Signal- bzw. Energieübertragungen bidirektionale, also wechselseitig in beide Richtungen vom Elektromotor zu einer Auswerteeinrichtung oder umgekehrt von einer Stromquelle zu dem Elektromotor bewerkstelligt sein. Zudem können die Signal- oder Energieübertragungen durch geeignete elektrische Sensoren oder sonstige elektromechanische Bauelementen überwacht und ausgewertet sein, sodass der Betriebszustand des Roboters permanent bekannt ist. Gegebenenfalls können aufgrund von vorhandenen Fehlermeldungen oder Abweichungen aus dem hinterlegten Programmablauf geeignete Eingriffe in den Betriebsablauf des Roboters von außen durch ein geeignetes elektrisches Gerät, beispielsweise einem Mikroprozessor, durchgeführt werden. Die entsprechenden Maßnahmen dienen dabei zum einen dazu den Arbeitsablauf des Roboters zu optimieren und zum anderen den vorgegebenen in einer Datenbank hinterlegten Arbeitsablauf möglichst exakt abzuarbeiten bzw. diesen nachzubilden durch entsprechende Bewegungen des Roboters. In der Zeichnung ist ein erfindungsgemäßes Ausführungsbeispiel eines Roboters dargestellt, das nachfolgend näher erläutert ist. Im Einzelnen zeigt:
- Figur 1: einen Roboter, mit drei Roboterarmen und einem an dem endseitigen Roboterarm angebrachten Flansch, durch den eine Greif- und/oder Haltevorrichtung rotierbar angetrieben ist, mit zwei der Greif- und/oder Haltevorrichtung zugeordneten an dieser radial beweglich abgestützten Druckstücken zur Halterung eines Gegenstandes, in perspektivischer Ansicht,
- Figur 2a: ein vergrößerter Ausschnitt des freien Endes des endseitigen Roboterarms gemäß Figur 1, mit einer außenseitig verlaufenen Verkabelung,
- Figur 2b: das freie Ende des Roboterarms gemäß Figur 1, mit einer innenseitigen verlaufenen Verkabelung,
- Figur 3a: der Roboterarm gemäß Figur 2a, mit elektrischen Anschlüssen zur Energie und/oder Signalübertragung bezüglich der Bewegung und Steuerung des Elektromotors in der Greif- und/oder Haltevorrichtung,
- Figur 3b: der Roboterarm gemäß Figur 2b, mit elektrischen Anschlüssen zur Energie und/oder Signalübertragung bezüglich der Bewegung und Steuerung des Elektromotors in der Greif- und/oder Haltevorrichtung,
- Figur 4a: ein Schnitt durch den Roboterarm gemäß Figur 2a, durch den die paarweise Anordnungen von Modulatoren und Demodulatoren zur Signal- bzw. Energieübertragung ersichtlich ist,
- Figur 4b: ein Schnitt durch den Roboterarm der Figur 2b, durch den die paarweise Anordnungen von Modulatoren und Demodulatoren zur Signal- bzw. Energieübertragung ersichtlich ist,
- Figur 5a: ein Schnitt durch den Roboterarm gemäß Figur 3a, und
- Figur 5b: ein Schnitt durch den Roboterarm gemäß Figur 3b.

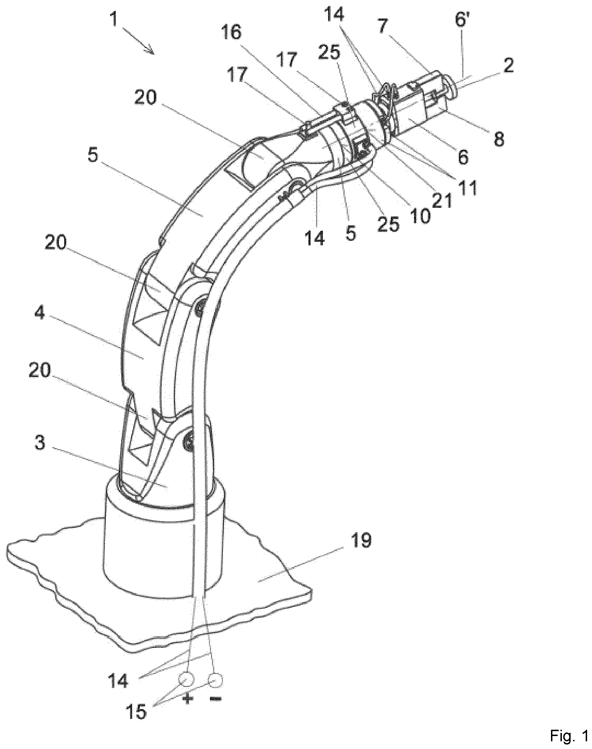

In Figur 1 ist ein Roboter 1 abgebildet, durch den ein Gegenstand 2 im Raum gegriffen und gehalten ist.

Der Gegenstand 2 kann dabei wahlweise ein zu bearbeitendes Werkstück sein, durch das Bearbeitungsschritte ausgeführt werden können. Sollte der Gegenstand 2 ein Werkzeug sein, ist dieses um die eigene Längsachse rotierbar gelagert und angetrieben. Die Gegenstände 2 können auch sonstige Trägerteile sein, durch die die Werkstücke oder Werkzeuge arretiert sind.

Der Roboter 1 weist drei Roboterarme 3, 4 sowie 5 auf, die jeweils über ein Gelenk 20 miteinander verbunden sind. Aufgrund des jeweils vorhandenen Gelenkes 20 sind die Roboterarme 3, 4 und 5 relativ zueinander beweglich. Das freie Ende 10 des endseitigen Roboterarms 5 kann daher in sechs Freiheitsgraden bewegt werden, nämlich in drei translatorischen und drei rotatorischen Freiheitsgraden.

Zudem ist der erste Roboterarm 3 an einem Traggestell 19 befestigt. Das Traggestell 19 kann dabei ein Werkzeugtisch, ein Maschinengestell oder dergleichen sein. An dem Roboterarm 5 ist an dessen freier Stirnseite 10 eine Greif- und/oder Haltevorrichtung 6 befestigt, die um ihre Längsachse 6' rotierbar ist. Der Greif- und/oder Haltevorrichtung 6 sind zwei Druckstücke 7 und 8 zugeordnet, die an dieser radial beweglich, also im gezeigten Ausführungsbeispiel in Richtung der Längsachse 6' oder entgegengesetzt dazu an der Greif- und/oder Haltevorrichtung 6 radial verschiebbar gelagert sind. Für den Antrieb der Druckstücke 7, 8 ist in der Greif- und/oder Haltevorrichtung 6 ein Elektromotor 9 vorzusehen.

Um die Greif- und/oder Haltevorrichtung 6 um ihre Längsachse 6' rotieren zu können, ist an dem endseitigen Roboterarm 5 an dessen freier Stirnseite 10 ein Koppler 25 vorgesehen, der zu der Greif- und/oder Haltevorrichtung 6 räumlich beabstandet ist.

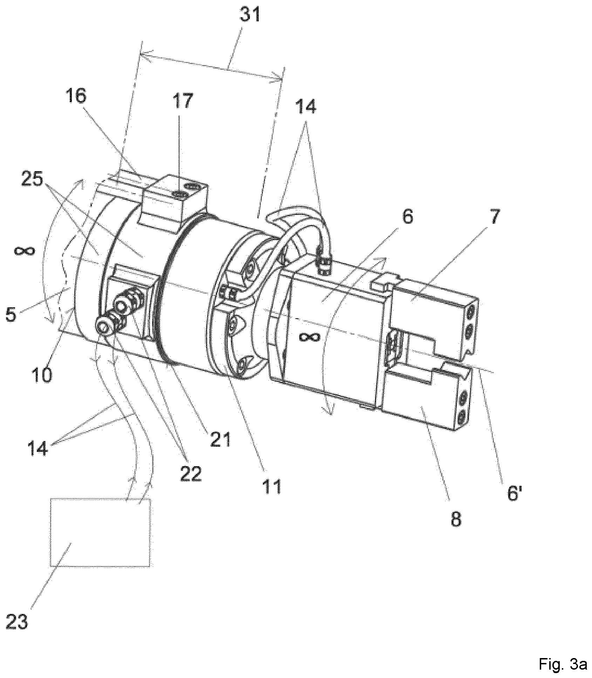

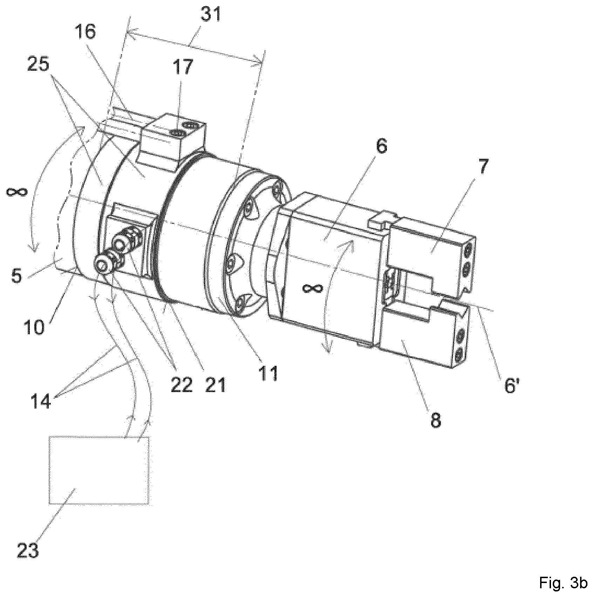

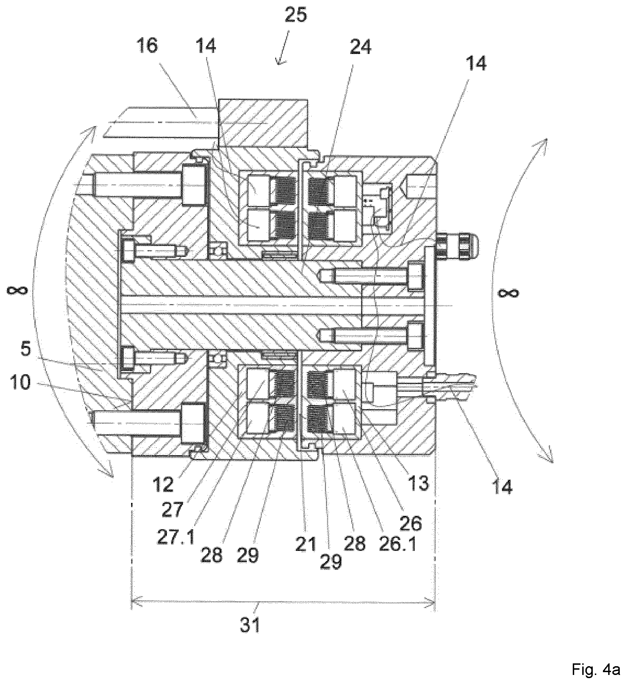

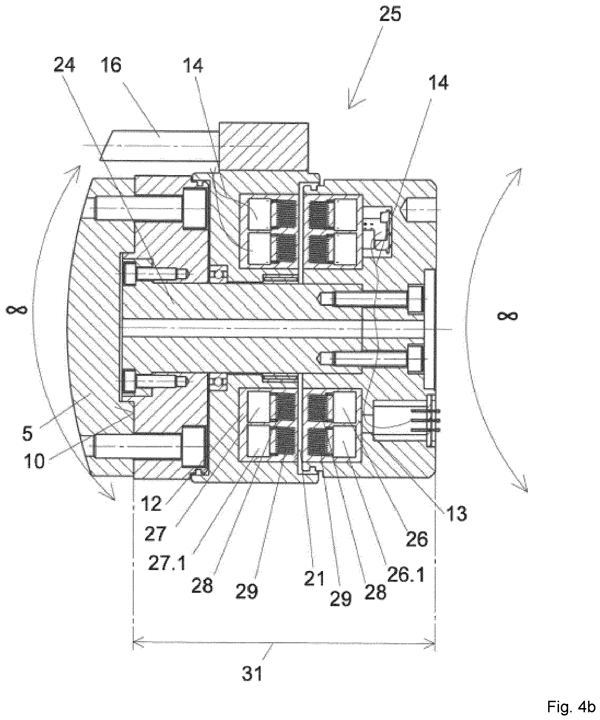

Insbesondere den Figuren 3a, 3b sowie 4a und 4b ist zu entnehmen, dass zwischen dem Koppler 25 und der Greif- und/oder Haltevorrichtung 6 ein Flansch 11 vorgesehen ist, durch den folglich die Greif- und/oder Haltevorrichtung 6 an dem Roboterarm 5 angebracht ist. Oftmals sind nämlich die freien Stirnseiten 10 der Roboterarme 5 derart ausgestaltet, dass kundenspezifische Greif- und/oder Haltevorrichtungen 6 nicht unmittelbar an den Roboterarm 5 angebaut werden können. Dieser Übergangsbereich zwischen dem endseitigen Roboterarm 5 und der Greif- und/oder Haltevorrichtung (6) ist definitionsgemäß als Schnittstelle 31 bezeichnet bzw. abgebildet.

Zudem ist der Elektromotor 9 in der Greif- und/oder Haltevorrichtung 6 sowohl mit elektrischer Energie bzw. Spannung als auch mit Steuer-Signalen für den Betrieb der der Greif- und/oder Haltevorrichtung 6 zu versorgen. Um die Energie- und Signalübertragung zwischen dem Roboterarm 5 und der Greif- und/oder Haltevorrichtung 6 ohne elektrische Leitungen zu gewährleisten, ist daher zunächst zwischen dem Koppler 25 und dem Flansch 11 ein Luftspalt 21 vorgesehen. Zudem soll die Greif- und/oder Haltevorrichtung 6 um ihre eigene Längsachse 6' rotieren. Zu diesem Zweck ist im Inneren des Kopplers 25, der zweiteilig ausgestaltet ist, eine Antriebswelle 24 vorgesehen, die in dem Koppler 25 drehbar gelagert ist. Die Antriebswelle 24 steht in trieblicher Wirkverbindung mit dem Flansch 11, sodass die Rotationsbewegungen und Rotationsgeschwindigkeiten der Antriebswelle 24 unmittelbar auf den Flansch 11 übertragen sind. Der Flansch 11 ist mit der Greif- und/oder Haltevorrichtung 6 gekoppelt, sodass die Rotationsbewegungen des Flansches 11 synchron auf die Greif- und/oder Haltevorrichtung 6 übertragen sind. Folglich können zwischen dem Flansch 11 und der Greif- und/oder Haltevorrichtung 6 elektrische Leitungen 14 verlaufen. Die Antriebswelle 24 durchgreift folglich die Schnittstelle 31 und dem diesen zugeordneten Luftspalt 21.

Zur Energieversorgung und/oder Signalübertragung für den Elektromotor 9 in der Greif- und/oder Haltevorrichtung 6 sind zwei Sende-Empfangseinrichtungen 12 und 13 gemäß den Figuren 4a bis 5b vorgesehen. Die erste Sende-Empfangseinrichtung 12 ist dabei in dem Koppler 25 und die zweite Sende-Empfangseinrichtung 13 in dem Flansch 11 der Greif- und/oder Haltevorrichtung 6 eingebaut. Die beiden Sende-Empfangseinrichtungen 12, 13 sind induktiv betrieben, sodass elektrische Energie und/oder elektrische Signale wechselweise zwischen diesen Sende-Empfangseinrichtungen 12 und 13 übertragen werden können.

Die jeweilige Sende-Empfangseinrichtung 12 bzw. 13 besteht dabei jeweils aus paarweise zueinander angeordneten Modulatoren 26 bzw. 26.1 sowie Demodulatoren 27 bzw. 27.1. Zwischen den jeweiligen Modulatoren 26, 26.1 sowie Demomodulatoren 27 und 27.1 sind induktiv betriebene Spulen 28 und 29 angeordnet, die somit paarweise zusammenwirken. Jedes Paar von Modulatoren 26 und Demodulatoren 27 sowie Spulen 28 tauschen bzw. übertragen Signale wechselweise. Das andere Paar von Modulator 26.1 und Demodulatoren 27.1 sowie Spulen 29 übertragen wechselweise Energie für die Ansteuerung bzw. den Betrieb des Elektromotors 9.

Die jeweiligen Modulatoren 26 oder 26.1 bzw. den Demodulatoren 27 oder 27.1 bilden demnach eine Schnittstelle 31, durch die der Luftspalt 21 zwischen dem Koppler 25 und dem Flansch 11 überbrückt ist. Somit können unabhängig voneinander Signale und Energie induktiv durch die jeweiligen Paare von Modulatoren 26 bzw. 26.1 und Demomodulatoren 27 bzw. 27.1 übertragen werden. Diese Art der Signal- und/oder Energieübertragung bietet zudem die Möglichkeit, dass mithilfe von Sensoren und anderen elektrischen Bauteilen eine permanente Überwachung der Betriebszustände des Roboters 1 zur Verfügung steht, die von externen elektrischen Geräten, beispielsweise Mikroprozessoren, ausgewertet und bei Bedarf in den Betriebsablauf des Roboters 1 von außen eingegriffen werden kann.

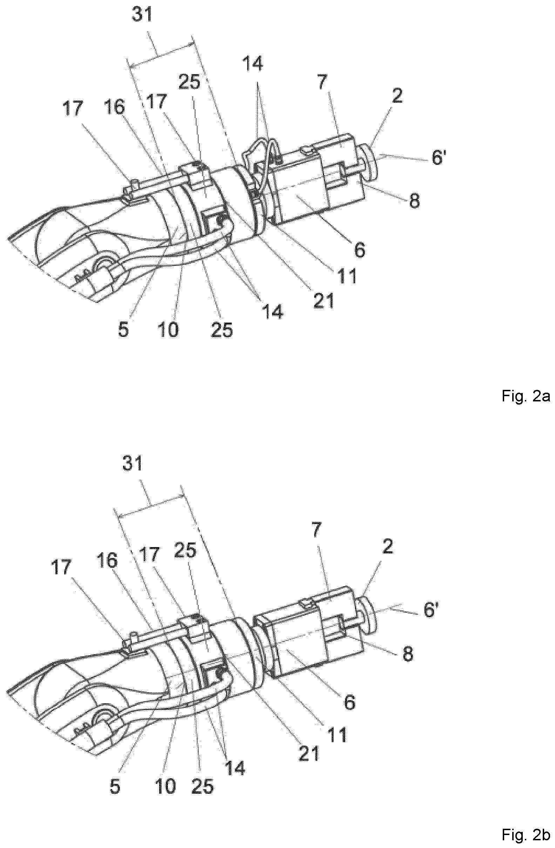

Zum einen kann daher die Energieversorgung des Elektromotors 9 über die Sende-Empfangseinrichtungen 12 und 13 erfolgen und zum anderen können wechselweise elektrische Signale gemäß den Figuren 2a bis 3b von einer Steuereinrichtung 23 über elektrische Anschlüsse 22 an die Greif- und/oder Haltevorrichtung 6 geleitet sein. Die Steuereinrichtung 23 liefert dabei Parameter sowie Zustellbewegungssignale an den Elektromotor 9 und es können die Druckstücke 7, 8 derart gesteuert sein, dass die aufgewendeten Haltekräfte durch nicht dargestellte Sensoren ermittelt und an die Steuereinrichtung 23 weitergeleitet werden, um derart den Elektromotor 9 zu steuern, dass dessen Spannkräfte bzw. Drehmomente erhöht bzw. fallweise verringert sind.

Sowohl die Energie- als auch die Signalübertragung zwischen der ersten Sende-Empfangseinrichtung 12 sowie zwischen der zweiten Sendeempfangseinrichtung 13 erfolgt rein induktiv, so dass die Rotationsbewegung des Flansches 11 ungehindert durch elektrische Leitungen ausgeführt werden kann.

Die elektrischen Leitungen 14 sind daher entweder an einer Stromquelle 15 oder an einem elektrischen Anschluss 26 gemäß den Figuren 2a bis 3b angeschlossen. Der elektrische Anschluss 22 ist dabei für die Steuereinrichtung 23 als Schnittstelle ausgestaltet.

Insbesondere den Figuren 2a bis 3b ist zu entnehmen, dass der Koppler 25 über eine Drehmomentstütze 16 an dem Roboterarm 5 drehfest angebracht ist. Die Rotation zwischen dem Koppler 25 und dem Flansch 11 der Greif- und/oder Haltevorrichtung 6 erfolgt demnach über die Antriebswelle 24, die im Inneren des Kopplers 25 und des Flansches 11 verläuft. Die Drehmomentstütze 16 ist mittels zweier Befestigungsschrauben 17 an dem Roboterarm 5 und dem Antriebsflansch 11 befestigt.

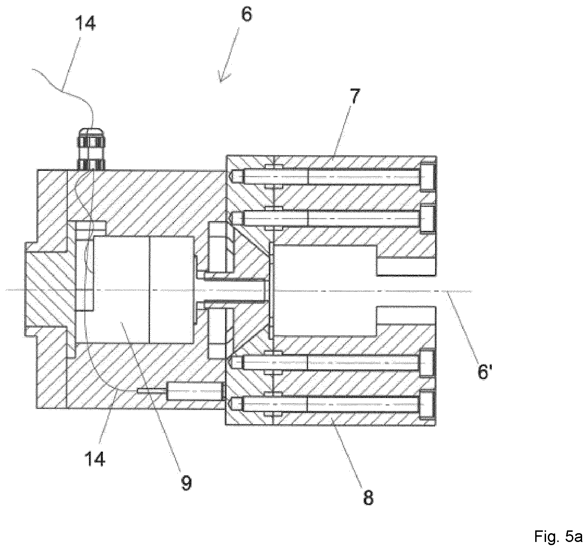

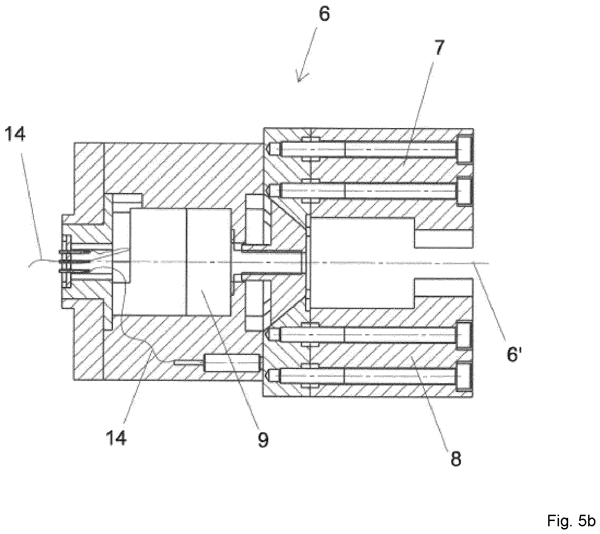

Insbesondere den Figuren 5a und 5b ist zu entnehmen, dass zwischen dem Antriebsflansch 11 und der daran angeschlossenen Greif- und/oder Haltevorrichtung 6 ein Luftspalt 21 vorhanden ist. Da die beiden Sende-Empfangseinrichtungen 12, 13 eine induktive Energie- und/oder Signalübertragung zur Verfügung stellen, sind zur Überbrückung des Luftspalts 21 keine elektrischen Leitungen vorzusehen. Somit kann die Greif- und/oder Haltevorrichtung 6 um ihre eigenen Längsachse 6' frei rotieren. Ein Zurückstellen in eine Ausgangsposition zur Einführung von elektrischen Kabeln entfällt demnach vollständig.

## Patentansprüche

1. Roboter (1) zum Greifen und/oder Halten von Gegenständen (2), insbesondere von Werkstücken, Werkzeugen oder Trägerteilen,
bestehend aus:
- mindestens einem Roboterarm (3, 4, 5), der an einem Traggestell (19) abgestützt ist und im Raum in mindestens einem translatorischen und/oder rotatorischen Freiheitsgrad beweglich ist,
- einer Greif- und/oder Haltevorrichtung (6), an der der jeweilige Gegenstand (2) lageorientiert abgestützt und/oder rotierbar gehalten ist,
- mindestens einem in der Greif- und/oder Haltevorrichtung (6) vorgesehenen Elektromotor (9), durch den ein Drehmoment und/oder eine Spannkraft erzeugt ist, die auf den Gegenstand (2) einwirkt,
- und aus einer in dem Roboterarm (5) gelagerten Antriebswelle (24), die mit der Greif- und/oder Haltevorrichtung (6) trieblich gekoppelt ist, vorzugsweise derart, dass die Greif- und/oder Haltevorrichtung (6) um die eigene Längsachse (6') rotiert,
- wobei zwischen einer freien Stirnseite (10) des endseitigen Roboterarms (5) und der Greif- und/oder Haltevorrichtung (6) eine Schnittstelle (31) vorgesehen ist, die von einem drehfest an dem Roboterarm (5) befestigten Koppler (25) und von einem an diesen angepassten Flansch (11) überbrückt ist, der drehfest mit der Greif- und/oder Haltevorrichtung (6) und der Antriebswelle (24) verbunden ist,
**dadurch gekennzeichnet,**
- **dass** in dem Koppler (25) eine erste induktiv betriebene Sende-Empfangseinrichtung (12) vorgesehen ist, die über eine dem Roboterarm (5) zugebrachte elektrische Leitung (14) mit einer Stromquelle (15) verbunden ist,
- **dass** in dem Flansch (11) eine zweite induktiv betriebene Sende-Empfangseinrichtung (13) vorgesehen ist, die mit dem Elektromotor (9) in der Greif- und/oder Haltevorrichtung (6) über elektrische Leitungen (14) verbunden ist,
- **dass** zwischen dem Koppler (25) und dem Flansch (11) ein Luftspalt (21) als Bestandteil der Schnittstelle (31) vorhanden ist,
- **dass** in dem endseitigen Roboterarm (5), dem Koppler (25) und dem Flansch (11) die Antriebswelle (24) gelagert und durchgeführt ist, die den Luftspalt (21) durchgreift und mit dem Flansch (11) trieblich gekoppelt ist,
- **dass** die erste und zweite induktive Sende-Empfangseinrichtung (12, 13) elektrische Spannungen und elektrische Signale wechselweise übertragen, durch die der Elektromotor (9) in der Greif- und/oder Haltevorrichtung (6) gesteuert und überwacht ist,
- und **dass** der Greif- und Haltevorrichtung (6) eine Vielzahl von Sensoren zugeordnet sind, durch die die Signale von der Greif- und Halteeinrichtung (6) an den Koppler (25) über eine Interface- oder Busschnittstelle übertragen sind.

2. Roboter nach Anspruch 1,
**dadurch gekennzeichnet,**
**dass** in jeder der Sende-Empfangseinrichtungen (12, 13) mindestens ein Modulator (26, 26.1) und ein Demodulator (27, 27.1) vorgesehen sind, durch die wechselweise elektrische Energie und elektrische Signale zwischen den beiden Sende-Empfangseinrichtungen (12, 13) übertragen sind.

3. Roboter nach Anspruch 2,
**dadurch gekennzeichnet,**
**dass** jedem Paar von Modulator (26, 26.1) und Demodulator (27, 27.1) ein Spulenpaar (28, 29) zugeordnet ist.

4. Roboter nach einem der vorgenannten Ansprüche,
**dadurch gekennzeichnet,**
**dass** dem Koppler (25) eine Anordnung von seriellen Empfangssignal-Übertragungsschnittstellen zugeordnet ist, durch die bidirektional eine Signal- bzw. Energieübertragung bewerkstelligt ist.

5. Roboter nach einem der vorgenannten Ansprüche,
**dadurch gekennzeichnet,**
**dass** zwischen der freien Stirnseite (10) des endseitigen Roboterarms (5) und dem Koppler (25) eine Drehmomentstütze (16) befestigt ist, durch die der Koppler (25) drehfest an dem Roboterarm (4) arretiert ist.

6. Roboter nach Anspruch 5,
**dadurch gekennzeichnet,**
**dass** die Drehmomentstütze (16) als Stange oder Leiste ausgestaltet ist und dass die beiden freien Enden der Drehmomentstütze (16) mittels Befestigungsschrauben (16, 17) an dem Roboterarm (5) bzw. dem Koppler (25) befestigt sind.

7. Roboter nach einem der vorgenannten Ansprüche,
**dadurch gekennzeichnet,**
**dass** die Greif- und/oder Haltevorrichtung (6) im und entgegen des Uhrzeigersinns rotierbar ist und dass die Rotation der Greif- und/oder Haltevorrichtung (6) unendlich bzw. unbegrenzt in eine Rotationsrichtung verdrehbar ist.

8. Roboter nach einem der vorgenannten Ansprüche,
**dadurch gekennzeichnet,**
**dass** ein oder mehrere Druckstücke (7, 8) an der freien Stirnseite der Greif- und/oder Haltevorrichtung (6) angebracht sind, durch die der jeweilige Gegenstand (2) an der Greif- und/oder Haltevorrichtung (6) arretiert ist.

9. Roboter nach einem der vorgenannten Ansprüche,
**dadurch gekennzeichnet,**
**dass** zwischen dem Flansch (11) und der Greif- und/oder Haltevorrichtung (6) elektrische Leitungen (14) vorgesehen sind, die innerhalb oder außerhalb der Greif- und/oder Haltevorrichtung (6) bzw. des Flansches (11) verlaufen.

10. Roboter nach einem der vorgenannten Ansprüche,
**dadurch gekennzeichnet,**
**dass** die Druckstücke (7, 8) an der Greif- und/oder Haltevorrichtung (6) in radialer Richtung verschiebbar gelagert sind oder den als Werkzeug ausgestalteten Gegenstand (2) arretieren, derart, dass das Werkzeug ein Werkstück bearbeitet.

11. Roboter nach einem der vorgenannten Ansprüche,
**dadurch gekennzeichnet,**
**dass** die Rotationsgeschwindigkeit der Greif- und/oder Haltevorrichtung (6) von der Antriebswelle (24) erzeugt ist.

## Claims

1. Robot (1) for gripping and/or holding objects (2), in particular workpieces, tools or carrier parts,
consisting of:
- at least one robot arm (3, 4, 5) which is supported on a support frame (19) and is movable in space in at least one translational and/or rotational degree of freedom,
- a gripping and/or holding apparatus (6) on which the relevant object (2) is supported in a position-oriented manner and/or rotatably held,
- at least one electric motor (9) which is provided in the gripping and/or holding apparatus (6) and by means of which a torque and/or a clamping force is generated which acts on the object (2),
- and a drive shaft (24) which is mounted in the robot arm (5) and is drivingly coupled to the gripping and/or holding apparatus (6), preferably in such a way that the gripping and/or holding apparatus (6) rotates about its own longitudinal axis (6'),
- an interface (31) being provided between a free end face (10) of the end robot arm (5) and the gripping and/or holding apparatus (6), which interface is bridged by a coupler (25) fixed in a rotationally fixed manner to the robot arm (5) and by a flange (11) adapted thereto, which is rotationally connected to the gripping and/or holding apparatus (6) and the drive shaft (24),
**characterized in that**
- a first inductively operated transmitting-receiving device (12) is provided in the coupler (25), which device is connected to a power source (15) via an electrical line (14) leading to the robot arm (5),
- **in that** a second inductively operated transmitting-receiving device (13) is provided in the flange (11), which device is connected to the electric motor (9) in the gripping and/or holding apparatus (6) via electrical lines (14),
- **in that** an air gap (21) is present between the coupler (25) and the flange (11), as part of the interface (31),
- **in that** the drive shaft (24) is mounted in and guided through the end robot arm (5), the coupler (25) and the flange (11), which drive shaft passes through the air gap (21) and is drivingly coupled to the flange (11),
- **in that** the first and the second inductive transmitting-receiving device (12, 13) alternately transmit electrical voltages and electrical signals, by means of which the electric motor (9) in the gripping and/or holding apparatus (6) is controlled and monitored,
- and **in that** the gripping and holding apparatus (6) is assigned a plurality of sensors, by means of which the signals from the gripping and holding apparatus (6) are transmitted to the coupler (25) via an interface or bus interface.

2. Robot according to claim 1,
**characterized in that**
in each of the transmitting-receiving devices (12, 13), at least one modulator (26, 26.1) and one demodulator (27, 27.1) are provided, by means of which electrical energy and electrical signals are alternately transmitted between the two transmitting-receiving devices (12, 13).

3. Robot according to claim 2,
**characterized in that**
each modulator (26, 26.1) and demodulator (27, 27.1) pair is assigned a pair of coils (28, 29).

4. Robot according to any of the preceding claims,
**characterized in that**
the coupler (25) is assigned an arrangement of serial receive signal transmission interfaces, by means of which a signal or energy transmission is accomplished bidirectionally.

5. Robot according to any of the preceding claims,
**characterized in that**
a torque support (16) is attached between the free end face (10) of the end robot arm (5) and the coupler (25), by means of which torque support the coupler (25) is locked to the robot arm (4) in a rotationally fixed manner.

6. Robot according to claim 5,
**characterized in that**
the torque support (16) is designed as a rod or bar and **in that** the two free ends of the torque support (16) are fastened to the robot arm (5) or the coupler (25) by means of fastening screws (16, 17).

7. Robot according to any of the preceding claims,
**characterized in that**
the gripping and/or holding apparatus (6) is rotatable clockwise and counterclockwise and **in that** the rotation of the gripping and/or holding apparatus (6) is infinitely or indefinitely rotatable in one direction of rotation.

8. Robot according to any of the preceding claims,
**characterized in that**
one or more pressure pieces (7, 8) are attached to the free end face of the gripping and/or holding apparatus (6), by means of which pressure pieces the relevant object (2) is locked to the gripping and/or holding apparatus (6).

9. Robot according to any of the preceding claims,
**characterized in that**
between the flange (11) and the gripping and/or holding apparatus (6), electrical lines (14) are provided, which extend inside or outside the gripping and/or holding apparatus (6) or the flange (11).

10. Robot according to any of the preceding claims,
**characterized in that**
the pressure pieces (7, 8) are mounted on the gripping and/or holding apparatus (6) so as to be displaceable in the radial direction or lock the object (2) designed as a tool in such a way that the tool machines a workpiece.

11. Robot according to any of the preceding claims,
**characterized in that**
the rotational speed of the gripping and/or holding apparatus (6) is generated by the drive shaft (24).

## Revendications

1. Robot (1) pour la préhension et/ou le maintien d'objets (2), en particulier de pièces à usiner, d'outils ou de parties de soutien,
constitué :
- d'au moins un bras de robot (3, 4, 5) qui est supporté sur un châssis de soutien (19) et qui est mobile dans l'espace selon au moins un degré de liberté en translation et/ou en rotation,
- d'un dispositif de préhension et/ou de maintien (6) sur lequel l'objet (2) respectif est supporté selon sa position et/ou est maintenu de manière à pouvoir tourner,
- d'au moins un moteur électrique (9) prévu dans le dispositif de préhension et/ou de maintien (6), au moyen duquel moteur électrique sont générés un couple et/ou une force de serrage qui agissent sur l'objet (2),
- et d'un arbre d'entraînement (24) monté dans le bras de robot (5) et accouplé en entraînement au dispositif de préhension et/ou de maintien (6), de préférence de telle sorte que le dispositif de préhension et/ou de maintien (6) tourne autour de son propre axe longitudinal (6'),
- dans lequel une interface (31) est prévue entre une face frontale libre (10) du bras de robot (5) côté extrémité et le dispositif de préhension et/ou de maintien (6), laquelle interface est couverte par un coupleur (25) fixé de manière solidaire en rotation au bras de robot (5) et par une bride (11) adaptée à celui-ci, laquelle bride est reliée de manière solidaire en rotation au dispositif de préhension et/ou de maintien (6) et à l'arbre d'entraînement (24),
**caractérisé en ce**
- **qu**'un premier dispositif d'émission-de réception (12) à fonctionnement inductif est prévu dans le coupleur (25), lequel premier dispositif est connecté à une source de courant (15) par l'intermédiaire d'une ligne électrique (14) amenée au bras de robot (5),
- **qu**'un second dispositif d'émission-de réception (13) à fonctionnement inductif est prévu dans la bride (11), lequel second dispositif est connecté au moteur électrique (9) dans le dispositif de préhension et/ou de maintien (6) par l'intermédiaire de lignes électriques (14),
- **qu**'il existe entre le coupleur (25) et la bride (11) un interstice (21) faisant partie de l'interface (31),
- **que**, dans le bras de robot (5) côté extrémité, le coupleur (25) et la bride (11), l'arbre d'entraînement (24) est monté et mis en marche, lequel arbre d'entraînement traverse l'interstice (21) et est accouplé en entraînement à la bride (11),
- **que** le premier et le second dispositif d'émission-de réception (12, 13) inductifs transmettent alternativement des tensions électriques et des signaux électriques par lesquels le moteur électrique (9) est commandé et surveillé dans le dispositif de préhension et/ou de maintien (6),
- **et qu**'au dispositif de préhension et de maintien (6) sont associés une pluralité de capteurs au moyen desquels les signaux sont transmis du dispositif de préhension et de maintien (6) au coupleur (25) par l'intermédiaire d'une interface d'interface ou de bus.

2. Robot selon la revendication 1,
**caractérisé en ce**
**que** dans chacun des dispositifs d'émission-de réception (12, 13) sont prévus au moins un modulateur (26, 26.1) et un démodulateur (27, 27.1), au moyen desquels de l'énergie électrique et des signaux électriques sont transmis alternativement entre les deux dispositifs d'émission-de réception (12, 13).

3. Robot selon la revendication 2,
**caractérisé en ce**
**qu'à** chaque paire de modulateur (26, 26.1) et de démodulateur (27, 27.1) est associée une paire de bobines (28, 29).

4. Robot selon l'une des revendications précédentes,
**caractérisé en ce**
**qu'**au coupleur (25) est associé un agencement d'interfaces de transmission de signaux de réception en série, au moyen duquel une transmission de signaux ou d'énergie est réalisée de manière bidirectionnelle.

5. Robot selon l'une des revendications précédentes,
**caractérisé en ce**
**qu'**entre la face frontale libre (10) du bras de robot (5) côté extrémité et le coupleur (25) est fixé un support de couple (16) au moyen duquel le coupleur (25) est bloqué de manière solidaire en rotation sur le bras de robot (4).

6. Robot selon la revendication 5,
**caractérisé en ce**
**que** le support de couple (16) est conçu comme une barre ou une baguette **et que** les deux extrémités libres du support de couple (16) sont fixées au bras de robot (5) ou au coupleur (25) au moyen de vis de fixation (16, 17).

7. Robot selon l'une des revendications précédentes,
**caractérisé en ce**
**que** le dispositif de préhension et/ou de maintien (6) peut être tourné dans le sens des aiguilles d'une montre et dans le sens inverse **et que** la rotation du dispositif de préhension et/ou de maintien (6) peut être tournée à l'infini ou de manière illimitée dans un sens de rotation.

8. Robot selon l'une des revendications précédentes,
**caractérisé en ce**
**qu**'une ou plusieurs pièces de pression (7, 8) sont mises en place sur la face frontale libre du dispositif de préhension et/ou de maintien (6), au moyen desquelles l'objet (2) respectif est bloqué sur le dispositif de préhension et/ou de maintien (6).

9. Robot selon l'une des revendications précédentes,
**caractérisé en ce**
**qu**'entre la bride (11) et le dispositif de préhension et/ou de maintien (6) sont prévues des lignes électriques (14) qui s'étendent à l'intérieur ou à l'extérieur du dispositif de préhension et/ou de maintien (6) ou de la bride (11).

10. Robot selon l'une des revendications précédentes,
**caractérisé en ce**
**que** les pièces de pression (7, 8) sont montées sur le dispositif de préhension et/ou de maintien (6) de manière à pouvoir coulisser dans la direction radiale ou bloquent l'objet (2) conçu comme un outil de telle sorte que l'outil usine une pièce.

11. Robot selon l'une des revendications précédentes,
**caractérisé en ce**
**que** la vitesse de rotation du dispositif de préhension et/ou de maintien (6) est générée par l'arbre d'entraînement (24).
